# EUROPEAN PATENT APPLICATION

(11) **EP 2 568 152 A1**
(43) Date of publication of application: **13.03.2013**
(21) Application number: 12184066.4
(22) Date of filing: 12.09.2012
(51) Int. Cl.: F02M 25/08, F02M 37/14, F02M 37/00, B60K 15/035

(54) **In-tank evaporative emission control system**

(30) Priority: 12.09.2011 US 201161533330 P; 04.09.2012 US 201213602651
(71) Applicant: TI Group Automotive Systems, L.L.C., Auburn Hills, MI 48326 (US)
(72) Inventor: Kambakhsh, Manouchehr N., Oakland Township, MI Michigan 48306 (US); Strzelecki, Edward J., Oxford, MI Michigan 48371 (US)
(74) Representative: von Kreisler Selting Werner

(57) **Abstract**

An evaporative emission control system (10) includes a fuel vapor adsorption unit in physical contact with a heat generator (30) inside a fuel tank (12). The heat generator can be a fuel pump (30) that heats the adsorption unit during a purge cycle, thereby increasing the rate of desorption of captured fuel vapor during the purge cycle. The fuel vapor adsorption unit and/or an additional fuel vapor adsorption unit may be located inside the tank volume proximate a tank inlet opening (22) so that incoming fuel can cool the adsorption unit(s) during a refueling event, thereby increasing the adsorption efficiency of the adsorption unit(s) during the refueling event.

## Description

This application claims the benefit of U.S. Provisional Application No. 61/533,330, filed September 12, 2011, and U.S. Non-Provisional Application No. 13/602,651, filed September 4, 2012, which is incorporated herein by reference in its entirety.

### Technical Field

The present disclosure relates generally to evaporate emission control systems.

### Background

Evaporative emission control of fuel vapor from vehicles and their fuel systems has become increasingly important as vehicle manufacturers seek to increase fuel efficiency and decrease environmental impact. Vehicle fuel storage tanks include a tank volume that is typically filled partially with liquid fuel and partially with fuel vapor and/or other gases. The fuel vapor is displaced from the tank volume during fuel tank filling. In order to prevent the fuel vapor from escaping to the atmosphere, various systems have been proposed to capture the vapor during tank filling events, such as Onboard Refueling Vapor Recovery (ORVR) systems built into vehicles or vapor recovery systems built into fuel dispensing equipment. ORVR systems may function by routing the displaced gases from the fuel tank through an adsorbing material to capture the fuel vapor and by routing the captured fuel vapor to the intake side of the vehicle engine during vehicle operation. These types of systems can add cost, weight, and complexity to the vehicle, and some of these factors may work in opposition to the benefits of an ORVR system.

### Summary

According to one embodiment, an evaporative emission control system includes a fuel tank, a fuel vapor adsorption unit, and a heat generator in physical contact with the fuel vapor adsorption unit at a thermal communication area located inside the fuel tank.

According to another embodiment, a fuel system module for use in an evaporative emission control system includes a fuel pump module having a housing and a fuel pump located inside the housing. The fuel system module also includes a fuel vapor adsorption unit located inside the housing and in physical contact with the fuel pump.

According to another embodiment, a method of controlling fuel evaporative emissions includes the steps of: cooling a fuel vapor adsorption unit in a fuel tank with liquid fuel during a refueling event; and heating the fuel vapor adsorption unit during a purge cycle with heat generated inside the fuel tank.

### Brief Description of the Drawings

The following detailed description of various embodiments and best mode will be set forth with reference to the accompanying drawings, in which:

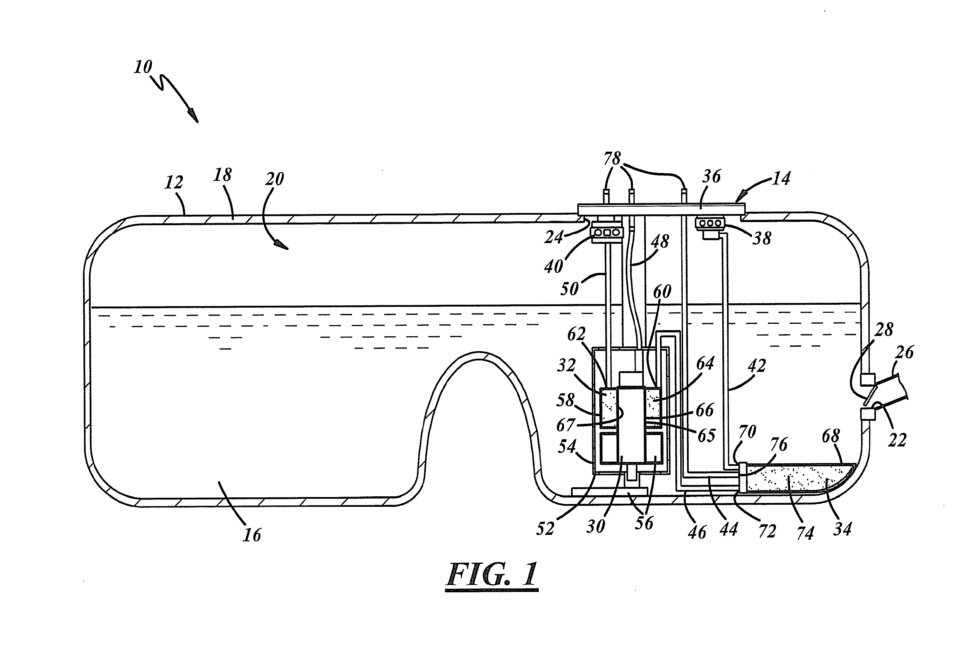

FIG. 1 is a cut-away view of a vehicle fuel tank that includes an evaporative emission control system according to one embodiment.

### Detailed Description of Presently Preferred Embodiments

Embodiments of the emission control system described below may be configured to manage thermal energy transfer within the system to increase overall system efficiency by cooling fuel vapor adsorption materials during fuel tank filling events and heating fuel vapor adsorption materials during purge cycles. The system captures displaced fuel vapor with fuel vapor adsorption materials during a fuel tank filling event. The adsorption process is exothermic; i.e., thermal energy is released when fuel vapor is adsorbed by the adsorption materials. This increases the temperature of the material, which can decrease its adsorption capacity or efficiency. The system releases the captured fuel vapor during a purge cycle, which occurs during normal vehicle operation. During the purge cycle, fuel is desorbed from the adsorption materials. The desorption process is endothermic, thus cooling the adsorption material and decreasing desorption efficiency. New components, arrangements, and methods have been devised that may help alleviate these efficiency problems.

Referring in more detail to the drawings, FIG. 1 is a cut-away view of an evaporative emission control system 10 according to one embodiment. System 10 is suitable for use with vehicles, marine vessels, or other mobile or stationary equipment having a powerplant, such as a combustion engine, that uses fuel stored in a liquid state. Gasoline, alcohol, or diesel engine-powered vehicles or equipment, hybrid vehicles, or fuel cell powered vehicles with on-board hydrocarbon reformers are a few examples of potential applications for evaporative emission control system 10. The system 10 may include a fuel tank 12 and a fuel system module 14.

Fuel tank 12 is a component for storing liquid fuel 16 such as a hydrocarbon fuel like gasoline. The tank 12 includes one or more walls 18 that at least partially define a storage volume 20, also referred to as the inside of the tank. In this embodiment, the tank 12 includes an inlet opening 22 and a module opening 24, each formed through a tank wall. Inlet opening 22 is an opening through which fuel flows into the storage volume during a filling or refueling event, and module opening 24 is an opening through which at least a portion of fuel system module 14 passes during assembly of the system 10. Each of openings 22 and 24 may be located anywhere along any tank wall. In the illustrated embodiment, inlet opening 22 is located near the bottom of tank 12 and may be proximate certain components of module 14, and module opening 24 is located along the top of tank 12. Some advantages of this arrangement are discussed in more detail below.

Also shown in the figure, but not necessarily included with system 10, is one end of a fuel filler tube 26 that is fluidly connected to the inlet opening 22, as well as an inlet check valve 28 located at or near the inlet opening or in the filler tube 26. Tank 12 may be formed in any shape or size by known techniques such as by forming and welding metal components, or by blow molding a suitable plastic material comprising one or more layers of material.

The illustrated fuel system module 14 includes a heat generator 30, a first fuel vapor adsorption unit 32, a second fuel vapor adsorption unit 34, a lid or mounting flange 36, a liquid-vapor separator 38, a fresh air valve 40, and various fluid conduits 42-50. Generally, the illustrated module 14 operates to capture fuel vapor from the storage volume 20 by routing it through the adsorption units 32, 34 when necessary (e.g., during a refueling event), and subsequently routing the captured fuel vapor from the adsorption units to some other useful location when desired, such as to the intake side of an engine during engine operation. It is noted that the "first" and "second" designations for adsorption units 32, 34 are arbitrary and are not necessarily indicators of sequence or order of location along any flow path, nor are they indicators of importance, preference, size, capacity, or the existence of other adsorption units in the system. For instance, in at least some implementations, the fuel system module 14 includes only one fuel vapor adsorption unit. Other adsorption units of the system may also be referred to as additional fuel vapor adsorption units.

The heat generator 30 and the adsorption units 32, 34 may be located inside the tank when the system is assembled, as shown. One or both of the adsorption units 32, 34 may have one or more portions that are in physical contact with the heat generator. More specifically, the heat generator 30 may include at least one surface in physical contact with at least one surface of one or both of the adsorption units 32, 34. In the illustrated example, the first adsorption unit 32 is located adjacent the heat generator 30, and the second adsorption unit 34 is located proximate the inlet opening 22 of the tank 12. This arrangement and others can provide advantageous management of thermal energy within the system 10, as described in greater detail below.

Heat generator 30 is a component that locally generates thermal energy from some other form of energy, such as electrical energy. In this embodiment the heat generator is a fuel pump 30 that is part of a fuel pump module 52, where the illustrated pump module 52 also includes a housing 54 and one or more filters 56. The fuel pump 30 is located inside the housing 54 and draws liquid fuel into module 52 from an intake side at its bottom and pressurizes liquid fuel for delivery to some other vehicle component, such as a fuel injection system, via conduit 48 and through an opening in the mounting flange 36. The fuel pump 30 is electrically powered and converts electrical energy to mechanical energy and thermal energy (e.g., via an electric motor). The mechanical energy pressurizes the liquid fuel, and the thermal energy is transferred or dissipated away from the pump module to or through some other component. In this embodiment, at least some of the thermal energy is transferred to the adsorption unit 32. Other types of in-tank heat generators may be included in system 10, such as electrically powered resistance heaters, fuel pump drivers, thermistors, etc.

Fuel vapor adsorption unit 32 may include a housing 58 and first and second access ports 60 and 62. The housing 58 is at least partially filled with a fuel vapor adsorption material 64, such as granulated and/or activated carbon. Each access port 60, 62 is in fluid communication with the inside of the housing 58 and arranged so that fuel vapor can enter the housing through one of the access ports - first access port 60 in this example - for adsorption by the adsorption material and exit the housing through the same access port during fuel pump operation (i.e., during a purge cycle). Fuel vapor and/or other gases can flow in either direction between access ports 60 and 62 along an internal path inside housing 58 that seeks to maximize surface contact between the flowing gases and the adsorption material 64. In this embodiment, access port 60 is connected to the second fuel vapor adsorption unit 34 via conduit 46 as shown, and access port 62 is vented to the atmosphere via conduit 50 and through valve 40 and an opening in the mounting flange 36. Alternatively, access port 60 may be connected directly to liquid-vapor separator 38 or some other component. Adsorption unit 32 is configured so that gases flow from first port 60 to second port 62 during a refueling event and in the opposite direction, from second port 62 to first port 60, during a purge cycle.

The adsorption unit housing 58 in this embodiment is located entirely within the pump module housing 54. The adsorption unit housing 58 at least partially defines a thermal communication area 66, also located inside the pump module housing 54, where the adsorption unit 32 is in physical contact with the fuel pump 30. The adsorption unit housing may at least partially surround the fuel pump 30 at the thermal communication area, as shown. In the illustrated embodiment, fuel pump 30 is generally cylindrical and is surrounded by housing 58, which is generally ring-shaped or sleeve-like. The fuel pump 30 and housing 58 are arranged so that an outer surface 65 of the fuel pump 30 is in intimate contact with an inner surface 67 of the housing 58. Each of the surfaces 65, 67 are generally cylindrical in this example, but could be any shape. This area of surface contact defines the thermal communication area 66 between the fuel pump 30 and the adsorption unit 32 in this example. The housing 58 may be constructed to be more thermally conductive than other known fuel vapor adsorption units, at least at the thermal communication area 66, to facilitate or maximize conduction of thermal energy away from the fuel pump or other heat generator 30 and into the adsorption material 64, particularly during a purge cycle. For example, at thermal communication area 66, the housing 58 may include metallic portions, relatively small wall thickness, or a surface that is manufactured to relatively precise dimensions to maximize surface contact with the heat generator 30. The cylinder/sleeve arrangement depicted in the figure is only illustrative, as other arrangements are possible such as those that seek to increase the overall surface area of thermal communication area 66.

The second fuel vapor adsorption unit 34 is also located inside the fuel tank 12 and operatively connected with the first fuel vapor adsorption unit 32. The second adsorption unit 34 may be similar in operation to first adsorption unit 32 and may include a housing 68 and first and second access ports 70 and 72. The housing 68 may be at least partially filled with a fuel vapor adsorption material 74, such as activated carbon, but is not necessarily the same material as adsorption material 64. Each access port 70, 72 is in fluid communication with the inside of the housing 68. Fuel vapor and/or other gases can flow in either direction between access ports 70 and 72 along an internal path inside housing 68 that seeks to maximize surface contact between the flowing gases and the adsorption material 74. In this embodiment, access port 72 and the first access port 60 of the first adsorption unit 32 are in fluid communication with each other so that fuel vapor can flow from one adsorption unit to the other.

In the illustrated example, the second fuel vapor adsorption unit 34 is arranged as a part of fuel system module 14 so that, when assembled with the fuel tank 12, it is located in or near the flow of incoming liquid fuel during vehicle refueling. For example, adsorption unit 34 may be located proximate fuel tank inlet opening 22 so that incoming fuel flows into the fuel tank 12 through the inlet opening and is directed toward the adsorption unit 34, as shown in the figure. Alternatively or additionally, the first fuel vapor adsorption unit 32 may be located proximate the inlet opening 22 to facilitate cooling during a filling event. The fuel system module 14 may also be constructed and arranged so that at least one of the adsorption units 32, 34 is located at or near the bottom of the inside of a fuel tank 12 when the module is assembled to the fuel tank. This can allow the adsorption unit(s) to be immersed in liquid fuel in the early part of a filling event and to be located in the naturally cooler portion of the liquid fuel during refueling.

Housing 68 may be at least partially constructed from a thermally conductive material, such as a metallic material, to facilitate or maximize the transfer of thermal energy between the adsorption material 74 and the liquid fuel 16. Housing 68 may have other characteristics that facilitate thermal energy transfer, such as a relatively small wall thickness (e.g., along the top of the housing nearest inlet 22) or a shape that seeks to increase or maximize its overall surface area that is in contact with both the liquid fuel inside the tank and the adsorption material 74 inside the housing 68.

In this embodiment, the adsorption unit 34 also includes a purge port 76. The adsorption unit 34 may be a multi-chamber carbon canister constructed and arranged so that fuel vapor and/or other gases can flow in either direction with respect to port 72 and along an internal path inside housing 68 that seeks to maximize surface contact between the flowing gases and the adsorption material 74. In the illustrated example, access port 70 is connected to the liquid-vapor separator 38 via conduit 42, and access port 72 is connected to the first adsorption unit 32 via conduit 46. The purge port 76 is ultimately connected to an intake side of the vehicle engine, or to some other vehicle component, via conduit 44 and through an opening in the mounting flange 36. Adsorption unit 34 is configured so that gases flow from first port 70 to second port 72 during a refueling event, and from second port 72 to purge port 76, during a purge cycle. The switching between access port 70 during refueling and purge port 76 during a purge cycle can be accomplished by a variety of known techniques. For example, the vacuum generated at the intake side of the engine during engine operation may directly or indirectly open or close one or more valves that allow vapor flow through conduit 44 and block fluid flow through conduit 42. Or the liquid-vapor separator 38 may include or may operate as a check valve so that during the purge cycle, fluid flow through unit 34 is allowed only from port 72 to purge port 76. In an alternative embodiment, the second vapor adsorption unit 34 is omitted and the first vapor adsorption unit 32 includes a purge port similar to that described in conjunction with unit 34 above. In such an embodiment, first adsorption unit 32 may be located proximate inlet 22 or otherwise placed in or near incoming liquid fuel flow so that it may be cooled by the liquid fuel during a filling event.

Mounting flange 36 is a closure for module opening 24. It may also serve as a structure for attachment of other components, such as separator 38, valve 40, the various conduits as shown, or other components. In this example, the fuel system module 14 includes the mounting flange 36, the first and second fuel vapor adsorption units 32, 34, and the heat generator 30 connected together so that a portion of the module 14 extends away from the mounting flange 36 and into the tank volume 20. The flange 36 shown in the figure includes various openings formed therethrough and/or fittings 78 for the attachment of external hoses or other conduits to transfer fluids to or from the system 10. Flange 36 is attached to tank 12 by known methods, such as mechanical fastening, adhering, welding or other joining techniques. One or both of the flange 36 and the opening 24 can include a lip or sealing surface so that when module 14 is assembled to the tank, the opening 24 is closed-off and fluid tight.

Liquid-vapor separator 38 separates liquids from gases before allowing fuel to enter a vapor adsorption unit. Separator 38 is preferably located at or near the top of tank 12 as shown, and in this embodiment is attached to flange 36. It functions to allow liquid fuel, such as the upper portion of stored liquid fuel 16 when the tank is nearly full or vaporized fuel that condenses to liquid when it comes into contact with the separator 38, to flow back into the liquid portion of the stored fuel. It is connected to port 70 of the second adsorption unit in this embodiment, but could be connected to first adsorption unit 32 in other embodiments.

Fresh air valve 40 is a valve arranged to stop the flow to the atmosphere that will create a pressure differential within the system that can be monitored by a pressure sensor. This may be used to test the system integrity to leaks. In one embodiment, valve 40 is operated by a solenoid that can change the position of the valve.

Conduits 42-50 are fluid carriers that move fuel vapor and/or other gases between system components. As such, one or more of them is optional, as some components may be designed to directly attach to one another without the need for separate conduits. The conduits, where included, are preferably constructed from materials that are resistant to the chemical composition of the particular fuel in the system. Some of the conduits, where applicable, may be constructed from relatively rigid materials such as metallic materials or non-elastomeric or semi-rigid plastic materials. For example, where a conduit is used to define a dimension or distance within the system, the conduit may be so constructed. One or more of conduits 42-46, for instance, may be constructed from such materials to ensure that second adsorption unit 34 is properly spaced from flange 36 to effectively locate unit 34 near the bottom of tank 12 when installed.

The various components of system 10 in the illustrative embodiment of FIG. 1 may operate together advantageously as described below in the context of a fuel filling event and a purge cycle. A fuel filling or refueling event typically occurs for a given vehicle when the portion of volume 20 of tank 12 filled with liquid fuel 16 becomes sufficiently small that the vehicle operator decides to refill the tank. This usually, but not always, means that the portion of volume 20 that is in the form of fuel vapor-laden gas is relatively large compared to the portion that is liquid fuel. The vapor filling the space of volume 20 above the liquid fuel level is typically a mixture of fuel vapor and air that has entered the tank during vehicle operation. A fuel filling event is relatively short in duration, usually lasting only a few minutes. When the refueling begins, the gaseous mixture in the tank increases in pressure as liquid fuel enters tank volume 20. The pressure is released by allowing the gases to flow out of volume 20 toward the atmosphere. One or more fuel adsorption units lie along the path to the atmosphere to remove fuel vapor from the gaseous mixture to minimize or eliminate the amount of fuel vapor in the mixture when it is released to the atmosphere.

During a fuel filling event with the illustrated embodiment, gases from tank volume 20 flow through separator 38, with any liquid being returned to the stored liquid fuel 16 therebelow. Fluid flow continues through conduit 42 and into second vapor adsorption unit 34, where adsorption material 74 exothermically adsorbs hydrocarbons or other types of fuel from the gaseous mixture. The flow continues through conduit 46 and into first adsorption unit 32, which may also be called a hydrocarbon scrubber in some embodiments, to remove any residual fuel vapors from the mixture flowing therethrough. Fuel pump 30 is not operating during this time, as the vehicle engine is typically turned off during refueling. Finally, the remaining gas, typically fuel-free air, is vented to atmosphere through an opening in flange 36. With the arrangement shown in FIG. 1, where adsorption unit 34 is located proximate fuel inlet opening 22, the adsorption unit 34 is cooled by the incoming fuel. For example, incoming fuel from underground storage tanks is typically at a temperature of about 59°F. Left uncooled, some adsorption units can reach temperatures as high as 180°F or more. With increased temperature, the adsorption material 74 has decreased adsorption capacity - i.e., a given amount of adsorption material surface area cannot adsorb as much fuel vapor at a higher temperature as it can at a lower temperature. Thus, the arrangement described and illustrated increases the amount of fuel vapor (e.g., hydrocarbons) that can be adsorbed by a given amount of adsorption material by keeping it cooled at a particularly useful time, which is during a fuel filling event when the adsorption material is functioning to adsorb vapors from the tank volume. The first adsorption unit 32 may also be cooled by the incoming liquid fuel, which can increase its adsorption efficiency as well.

A purge cycle takes place over a longer period of time than a refueling event, generally occurring while the vehicle is being operated - i.e., while the engine is running. During the purge cycle, purge air is caused to flow from fresh air valve 40 to first vapor adsorption unit 32. The air flow is caused by pressurizing the air source or by creating a vacuum at the opposite end of the flow path. Of course, it is possible to use purge gases other than air. During the purge cycle, fuel pump 30 is generating heat as it pumps fuel from the tank toward the engine, thus warming adsorbent material 64 and decreasing its adsorption capacity, thereby increasing the rate of desorption. Fuel vapor stored in the adsorption unit 32 is desorbed from the material 64 and allowed to flow as a mixture with the purge air through conduit 46 and toward second adsorption unit 34. The gas mixture entering adsorption unit 34 may be warmed relative to the air that entered adsorption unit 32 and thus helps with desorption of fuel vapor from adsorbent material 74 of unit 34. Thus, both of adsorption units 32 and 34 may be heated during the purge cycle by the heat generator 30, either directly or indirectly. The fuel-containing gas then flows out of adsorption unit 34 and is purged from the system via conduit 44. It may be routed to the intake side of the vehicle engine for combustion, or otherwise recycled or reclaimed by the vehicle.

The embodiments described, and other embodiments of system 10, can both heat a vapor adsorption unit during a purge cycle and cool a vapor adsorption unit during a filling event. The heated and cooled vapor adsorption units may be the same unit or separate units. Thus, a method of controlling fuel evaporative emissions can be described that comprises cooling a fuel vapor adsorption unit in a fuel tank with liquid fuel during a refueling event and heating the fuel vapor adsorption unit during a purge cycle with heat generated inside the fuel tank. The step of heating may include heating the fuel vapor adsorption unit with heat generated by the fuel pump. The method may further include cooling a separate fuel vapor adsorption unit with liquid fuel during the refueling event and/or heating the separate fuel adsorption unit during the purge cycle. Where the system includes more than one fuel vapor adsorption unit, the method may include routing fuel vapor-laden gas into and through an additional fuel vapor adsorption unit during the step of heating. For example, in the example of FIG. 1, the step of heating may occur during operation of the fuel pump. Captured fuel is desorbed from the adsorption material of the first adsorption unit 32 and routed into and through the second adsorption unit 34.

The system may use sources of thermal energy and heat sinks that are typically wasted or that otherwise go unused to enhance the performance of the system. For example, fuel pumps typically generate excess heat that is dissipated into the atmosphere or, in the case of in-tank fuel pump modules, is dissipated into the liquid fuel volume. Some fuel pumps convert up to about 70% or more of the provided electrical energy to thermal energy. By utilizing fuel pump 30 as a heat generator for system 10, system performance is increased by realizing a more efficient purge cycle that frees up more adsorption material surface area in a shorter period of time. At the same time, the transfer of waste heat from the fuel pump to the liquid fuel volume is kept to a minimum, thus reducing excess evaporation of the fuel in the tank and the unnecessary use of adsorption unit adsorption capacity.

Likewise, cool fuel entering a typical fuel tank typically increases in temperature over time by absorbing thermal energy from the exterior environment or from adjacent or nearby vehicle components. The embodiments of the above-described system instead use the cool fuel as a heat sink to transfer heat away from one or more adsorbing units at the useful time of refueling. Such a system may offer increased performance over other known evaporative emission control systems by utilizing already available heating and cooling sources. This increased performance can allow the use of smaller system components that weigh less, cost less, and use less materials, thus further increasing the overall operating efficiency of the vehicle. While one or more of the above-described system components may be located outside of the fuel tank, inclusion of module 14 components into a single assembly where the components are located inside the fuel tank may allow for ease of assembly and ease of material handling. Additionally, locating the system components and the inter-component joints inside the tank volume may also decrease overall vehicle fuel vapor emissions compared to systems with external components.

While the forms of the invention herein disclosed constitute presently preferred embodiments, many others are possible. It is not intended herein to mention all the possible equivalent forms or ramifications of the invention. It is understood that the terms used herein are merely descriptive, rather than limiting, and that various changes may be made without departing from the spirit or scope of the invention.

## Claims

1. An evaporative emission control system, comprising:
a fuel tank;
a fuel vapor adsorption unit; and
a heat generator in physical contact with the fuel vapor adsorption unit at a thermal communication area located inside the fuel tank.

2. The evaporative emission control system of claim 1, wherein the heat generator is a fuel pump.

3. The evaporative emission control system of claim 1, further comprising:
a fuel pump module having a housing and a fuel pump located inside the housing, wherein the thermal communication area is inside the housing.

4. The evaporative emission control system of claim 3, wherein the fuel pump is the heat generator and the fuel vapor adsorption unit is located inside the module housing.

5. The evaporative emission control system of claim 1, wherein the fuel vapor adsorption unit at least partially surrounds the heat generator at the thermal communication area.

6. The evaporative emission control system of claim 1, further comprising an additional fuel vapor adsorption unit located inside the fuel tank and operatively connected with the other fuel vapor adsorption unit.

7. The evaporative emission control system of claim 5, wherein at least one of the fuel vapor adsorption units is located proximate a tank inlet of the fuel tank so that incoming fuel flows into the fuel tank through the tank inlet and is directed toward the fuel vapor adsorption unit(s).

8. The evaporative emission control system of claim 1, further comprising:
a fuel system module that includes a mounting flange, the fuel vapor adsorption unit, and the heat generator connected together, wherein a portion of the module extends away from the mounting flange and into the tank volume.

9. A method of controlling fuel evaporative emissions, comprising the steps of:
cooling a fuel vapor adsorption unit in a fuel tank with liquid fuel during a refueling event; and
heating the fuel vapor adsorption unit during a purge cycle with heat generated inside the fuel tank.

10. The method of claim 9, wherein the step of heating includes heating the fuel vapor adsorption unit with heat generated by a fuel pump.

11. The method of claim 9, further comprising:
cooling a separate fuel vapor adsorption unit with liquid fuel during the refueling event.

12. The method of claim 9, further comprising:
routing fuel vapor-laden gas into and through an additional fuel vapor adsorption unit during the step of heating.
